# EUROPÄISCHE PATENTSCHRIFT

(11) **EP 2 500 577 B1**
(45) Veröffentlichungstag und Bekanntmachung des Hinweises auf die Patenterteilung: **22.06.2016**
(21) Anmeldenummer: 11002073.2
(22) Anmeldetag: 12.03.2011
(51) Int. Cl.: F04D 13/06, F04D 29/02, F04D 29/42, H02K 5/128, H02K 5/22

(54) **Heizungsumwälzpumpe**
Heat circulation pump
Pompe de recirculation de chauffage

(43) Veröffentlichungstag der Anmeldung: 19.09.2012
(73) Patentinhaber: Grundfos Management a/s, 8850 Bjerringbro (DK)
(72) Erfinder: Høj, Finn Mathiesen, 8200 Aarhuis N (DK)
(74) Vertreter: Vollmann, Heiko

(56) Entgegenhaltungen:
- EP-A1- 2 164 153
- EP-A1- 2 166 230
- WO-A1-2005/071001
- WO-A1-2008/019818
- DE-A1-102005 021 726
- DE-A1-102007 022 070
- DE-B3-102004 030 721
- US-A- 4 475 873
- US-A- 4 851 725
- US-A1- 2003 088 076
- US-A1- 2005 167 025
- US-A1- 2008 277 619

## Beschreibung

Die Erfindung betrifft eine Heizungsumwälzpumpe mit den im Oberbegriff des Anspruchs 1 angegebenen Merkmalen. Eine solche Pumpe ist z.B. aus der EP 2 166 230 bekannt.

Derartige Heizungsumwälzpumpen zählen zum Stand der Technik. Sie weisen typischerweise ein Pumpengehäuse mit einem Saug- und einem Druckstutzen sowie ein darin angeordnetes Pumpenlaufrad auf. Zum Antrieb des Pumpenlaufrads ist ein Elektromotor vorgesehen, dessen Welle das Pumpenlaufrad trägt. Der den Rotor umgebende Stator ist in einem Gehäuse angeordnet, welches an seiner zum Pumpengehäuse weisenden Seite einen Flansch oder dergleichen Anschlusselement aufweist, über den das Motorgehäuse, insbesondere das Statorgehäuse mit dem Pumpengehäuse verbunden ist. Zum elektrischen Anschluss des Motors ist ein Klemmenkasten vorgesehen, welcher an der vom Pumpengehäuse abgewandten Axialseite des Statorgehäuses angeordnet ist. Der Klemmenkasten umfasst typischerweise auch die Motorelektronik, also beispielsweise einen Frequenzumrichter. Eine weitere Heizungspumpe der vorgenannten Art ist beispielsweise aus DE 10 2004 030 721 B3 bekannt.

Derartige Heizungsumwälzpumpen kleiner und mittlerer Bauart werden in Großserien hergestellt, weshalb auch kleinste Verbesserungen schon große Einsparungen bei Fertigung und/oder Montage bedeuten können. Es ist ein stetes Bestreben diese Pumpen einerseits technisch weiter zu verbessern und noch zuverlässiger zu gestalten andererseits die Herstellungs- und Montagekosten zu senken.

Diese Aufgabe wird gemäß der Erfindung durch eine Heizungsumwälzpumpe mit den in Anspruch 1 angegebenen Merkmalen gelöst. Vorteilhafte Ausgestaltungen der Erfindung sind in den Unteransprüchen der nachfolgenden Beschreibung und der Zeichnung angegeben.

Die erfindungsgemäße Heizungsumwälzpumpe weist ein Pumpengehäuse mit darin angeordnetem Pumpenlaufrad auf, das von einem Elektromotor angetrieben ist, dessen Stator in einem mit dem Pumpengehäuse verbundenen Motorgehäuse angeordnet ist. Im Motorgehäuse ist ein Klemmenkasten angeordnet, der zum elektrischen Anschluss der Motorwicklung und zur Aufnahme von elektrischen und/oder elektronischen Bauteilen der Motorsteuerung vorgesehen und ausgebildet ist. Erfindungsgemäß besteht der Klemmenkasten aus mindestens zwei aus thermoplastischem Kunststoff bestehenden Bauteilen die stoffschlüssig durch Schweißen miteinander dicht und unlösbar verbunden sind, wobei der Klemmenkasten zum Motor und zur Umgebung hin dicht abgeschlossen ausgebildet ist.

Grundgedanke der Erfindung ist es, den Klemmenkasten, der insbesondere die feuchtigkeitsempfindliche Motorelektronik aufnimmt, dicht abgeschlossen auszubilden, und zwar sowohl zum Motor hin als auch zur Umgebung hin. Um dies auch hinsichtlich der Klemmenkastenbauteile sicherzustellen, ist gemäß der Erfindung vorgesehen, diese stoffschlüssig miteinander zu verbinden. Es handelt sich bei diesen Bauteilen typischerweise um einen Klemmenkastengrundkörper, der durch einen Deckel abgeschlossen wird, der Klemmenkasten kann jedoch auch anders aufgebaut sein, beispielsweise diagonal geteilt. Dadurch, dass diese Bauteile stoffschlüssig miteinander verbunden sind, was typischerweise aber nicht notwendigerweise fabrikmäßig erfolgt, kann ein hermetisch dichter Abschluss des Klemmenkastens zuverlässig und langzeitig sichergestellt werden, wodurch die Standzeit der im Klemmenkasten angeordneten empfindlichen elektrischen und/oder elektronischen Bauteile der Motorsteuerung, insbesondere in feuchten und rauen Umgebungen deutlich verbessert werden kann. Darüber hinaus ist die stoffschlüssige Verbindung der Klemmenkastenteile kostengünstig, da auf Dichtungen zwischen diesen Bauteilen vollständig verzichtet werden kann. Insoweit scheiden auch Undichtigkeiten infolge von Alterungen von Dichtung systembedingt aus. Weiterhin hat ein solches irreversibles Verschließen des Klemmenkastens den Vorteil, dass innerhalb des Klemmenkastens keinerlei besondere Vorkehrungen zu treffen sind, welche die Gefahr eines Stromschlages verhindern, wie dies typischerweise bei Klemmenkästen mit abschraubbaren Klemmenkastendeckel der Fall ist. Schließlich erlaubt die erfindungsgemäße Lösung den einfachen Austausch des Klemmenkastens mit darin befindlicher Motorsteuerung, eine Reparatur ist schon aufgrund der grundsätzlich nicht vorgesehenen Öffenbarkeit des Klemmenkastens, wenn überhaupt nur im Fachbetrieb möglich.

Der Klemmenkasten ist aus mindestens zwei aus thermoplastischem Kunststoff bestehenden Bauteilen gebildet ist, also beispielsweise einem Klemmenkastengrundkörper und einem Deckel, die durch Schweißen dicht und unlösbar miteinander verbunden sind. Derartige thermoplastische Kunststoffteile können mit nur geringem technischen Aufwand zuverlässig und dicht miteinander verschweißt werden, wodurch einerseits die Fertigungskosten durch Verzicht auf eine Dichtung sowie die sonst üblichen Schraubverbindungen gesenkt werden können und darüber hinaus ein hermetisch dichter Klemmenkasten gebildet werden kann.

Dabei ist der Klemmenkasten vorteilhaft so ausgebildet, dass er aus einem Grundkörper in Form eines einseitig offenen Behälters besteht, der durch einen Deckel abgeschlossen ist. Der Deckel kann sich auch noch über einen Teil der Seitenwandung des Klemmenkastens erstrecken, wenn die Schweißnahtführung in diesem Bereich günstig realisierbar ist.

Wegen der bereits eingangs erwähnten hohen Stückzahlen bei Heizungsumwälzpumpen wird der Klemmenkasten vorteilhaft aus Kunststoffspritzgussteilen gebildet, die prädestiniert für die Großserie sind und im Übrigen, da thermoplastisch, schweißbar sind.

Insbesondere bei modernen Heizungsumwälzpumpen kleiner und mittlerer Baugrößen, die mit vergleichsweise schlanken Permanentmagnetrotoren arbeiten, ist es von Vorteil, den Klemmenkasten an der von dem Pumpengehäuse abgewandten Axialseite des Motorgehäuses anzuordnen, da dann einerseits ausreichend Bauraum für die Motorelektronik gebildet werden kann und andererseits gegebenenfalls der Stator des Motors ganz oder teilweise übergriffen werden kann, um auch ein vom Design ansprechendes Äußeres zu erzielen und auf eine Bearbeitung des Motorgehäuses weitgehend verzichten zu können.

Der dichte Abschluss des Klemmenkastens ist insbesondere bei solchen Motoren vorteilhaft einsetzbar, die als Nassläufer ausgebildet sind. Um bei einem Blockieren des Rotors diesen auch dann starten zu können, wenn die elektromagnetische Kraft alleine nicht ausreicht, ist es zweckmäßig, das motorseitige Wellenende über eine verschließbare Gehäuseöffnung zugänglich zu machen, wie dies bei einer Vielzahl von Heizungsumwälzpumpen durch einen in der stirnseitigen Axialwand befindlichen Gewindestopfen vorgesehen ist. Um eine solche Anordnung auch bei Anordnung des Klemmenkastens axialseitig des Motors zu gewährleisten, ist gemäß einer vorteilhaften Weiterbildung der Erfindung der Klemmenkasten ringförmig ausgebildet, sodass durch die zentrale Ausnehmung des Klemmenkastens ein Werkzeug oder dergleichen hindurchgeführt werden kann, um die Gehäuseöffnung des Motorgehäuses zu öffnen, die Welle zu drehen und die Gehäuseöffnung wieder zu verschließen.

Der Klemmenkastenboden ist vorteilhaft geschlossen ausgebildet, um sicherzustellen, dass von der Motorseite her keine Feuchtigkeit in diesen eindringen kann. Dabei ist es von Vorteil, den Klemmenkastenboden von der axialen Stirnwand des Motors beabstandet anzuordnen, um eine thermische Entkopplung zu erreichen.

Um den Klemmenkastenboden einerseits geschlossen auszubilden, andererseits jedoch die zur elektrischen Verbindung mit der Motorwicklung erforderlichen Kontakte bereitzustellen, ist gemäß einer Weiterbildung der Erfindung vorgesehen, diese Kontakte in den Klemmenkastenboden einzugießen, d. h. diese Kontakte beim Spritzgießen so im Werkzeug anzuordnen, dass sie nach dem Spritzgussvorgang einstückig mit dem entsprechenden Klemmenkastenbauteil ausgebildet sind. Dabei ist zweckmäßigerweise die Herausführung der Kontakte aus dem Klemmenkasten so gestaltet, dass ein Teil einer elektrischen Steckverbindung gebildet wird, deren anderer Teil motorseitig zur elektrischen Verbindung mit der Motorwicklung ausgebildet ist. Eine solche elektrische Steckverbindung hat den Vorteil, dass die Bauteile ausgetauscht werden können, wenn beispielsweise die Motorwicklung schadhaft ist, oder aber ein Fehler in der Motorsteuerung vorliegt.

Gemäß einer Weiterbildung der Erfindung ist es vorgesehen, elektrische Kontakte in eine Seitenwandung des Klemmenkastens einzugießen und dort zu einem Teil einer Steckverbindung als Stecker oder als Muffe auszubilden, deren anderer Teil durch die entsprechend ausgebildete Muffe oder den entsprechend ausgebildeten Stecker einer elektrischen Anschlussleitung gebildet ist. Damit kann der erfindungsgemäße Klemmenkasten werkzeuglos angeschlossen werden, und zwar sowohl motorseitig als auch netzseitig.

Um nicht nur einen werkzeuglosen Anschluss sondern auch eine werkzeuglose Montage sicherstellen zu können, ist es vorteilhaft, den Klemmenkasten mittels Schnappverbindung am Motor- und/oder Pumpengehäuse zu befestigen. Die Schnappverbindung ist dabei vorteilhaft so ausgestaltet, dass sie mit der elektrischen Steckverbindung zusammenwirkt oder die elektrische Steckverbindung einen Teil der Schnappverbindung oder eine von mehreren Schnappverbindungen bildet. Bei einer solchen Ausgestaltung kann durch einfaches Aufstecken des Klemmenkastens auf das Motorgehäuse sowohl die mechanische Verbindung zwischen Klemmenkasten und Motorgehäuse als auch die elektrische Verbindung zwischen dem Klemmenkasten und der Motorwicklung hergestellt wird. Die Schnappverbindung kann auch zwischen Klemmenkasten und Pumpengehäuse vorgesehen sein, wenn Teile des Klemmenkastens das Motorgehäuse übergreifen.

Weiterhin kann gemäß einer Weiterbildung der Erfindung in der Klemmenkastenwandung ein Wärmeverteiler eingegossen sein, beispielsweise um die im Klemmenkasten entstehende Abwärme gezielt nach außen, insbesondere an einen dort angeordneten Kühlkörper ableiten zu können. Ein solcher Wärmeverteiler ist vorteilhaft an einer Seite des Klemmenkastengehäuses eingegossen, die nicht zum Motorgehäuse hinweist. Ein solcher Wärmeverteiler kann durch einen eingegossenen Metallkörper gebildet sein, auch kann ein Kühlkörper in die Gehäusewandung eingegliedert sein, wobei innerhalb des Klemmenkastens dann eine wärmeleitende Verbindung mit den wörmeerzeugenden Leistungselektronikbauteilen gegeben ist. Alternativ kann ein solcher Wärmeverteiler auch mittels einer Schnappverbindung an der Außenseite des Klemmenkastens aufgesteckt sein.

Insbesondere bei großen Stückzahlen dürfte es herstellungstechnisch noch günstiger sein, den Wärmeverteiler aus wärmeleitendem Kunststoff herzustellen und diesen im Zwei-Komponenten-Spritzgussverfahren zusammen mit dem Bauteil zu spritzen, das Teil des Klemmenkastens bildet.

Besonders vorteilhaft ist es, wenn der Klemmenkasten aus zwei durch Laserschweißen miteinander verbundenen Bauteilen gebildet ist, da mit diesem Schweißverfahren auf einfache und schnelle Weise eine zuverlässig dichte Schweißverbindung hergestellt werden kann. Dabei wird zweckmäßigerweise durch eines der beiden Bauteile hindurchgeschweißt, d. h., dass eines der Bauteile für die Strahlung des Lasers durchlässig und das andere Bauteil undurchlässig sein sollte. Der Laserstrahl wird dann durch das für die Laserstrahlung durchlässige Bauteil auf das für den Laserstrahl undurchlässige Bauteil gerichtet, wodurch das Material im Bereich der Trennfuge aufgeschmolzen und innig miteinander verbunden wird. Besonders vorteilhaft ist es dabei, wenn der Klemmenkastengrundkörper, also der einseitig offene Behälter aus einem für Laserstrahlen undurchlässige Material und der diesen abschließende Deckel aus einem dafür durchlässigen Material gebildet ist, da dann die Schweißung von der gut zugänglichen vom Motor abgewandten Außenseite des Klemmenkastens erfolgen kann. Die Schweißnaht kann damit praktisch zu jedem beliebigen und geeigneten Zeitpunkt der Fertigung gesetzt werden, sei es, dass zunächst der Klemmenkasten mit den darin befindlichen elektrischen und elektronischen Bauelementen gefertigt und dann durch Schweißen hermetisch abgeschlossen wird oder auch dieser hermetische Abschluss erst nach Montage am Motor erfolgt. Dieses Laserschweißverfahren ist auch deshalb besonders vorteilhaft, weil hiermit sonst nur schwer zugängliche Stellen verschweißbar sind, wie beispielsweise im Bereich der zentralen Ausnehmung des Klemmenkastens.

Die Erfindung ist nachfolgend anhand von in der Zeichnung dargestellten Ausführungsbeispielen näher erläutert. Es zeigen:
- Fig. 1: in vereinfachter perspektivischer Darstellung eine Heizungsumwälzpumpe gemäß der Erfindung,
- Fig. 2: einen Klemmenkasten mit radialen Erweiterungen in Darstellung entsprechend Fig. 1,
- Fig. 3: in perspektivischer Explosionsdarstellung Pumpe, Motor und Klemmenkasten,
- Fig. 4: in perspektivischer Explosionsdarstellung den Klemmenkasten gemäß Fig. 3 in seinem Aufbau,
- Fig. 5: eine perspektivische Ansicht des Klemmenkastens von unten,
- Fig. 6: eine perspektivische Längsschnittdarstellung von Klemmenkasten und Motor mit angesetztem Pumpenlaufrad,
- Fig. 7: in vergrößerter Darstellung einen Längsschnitt im Bereich des Erdungskontaktes zwischen Klemmenkasten und Motor und
- Fig. 8: in vergrößerter Darstellung eine Ansicht auf den Eckbereich des Motorgehäuseflansches von der Pumpenseite.

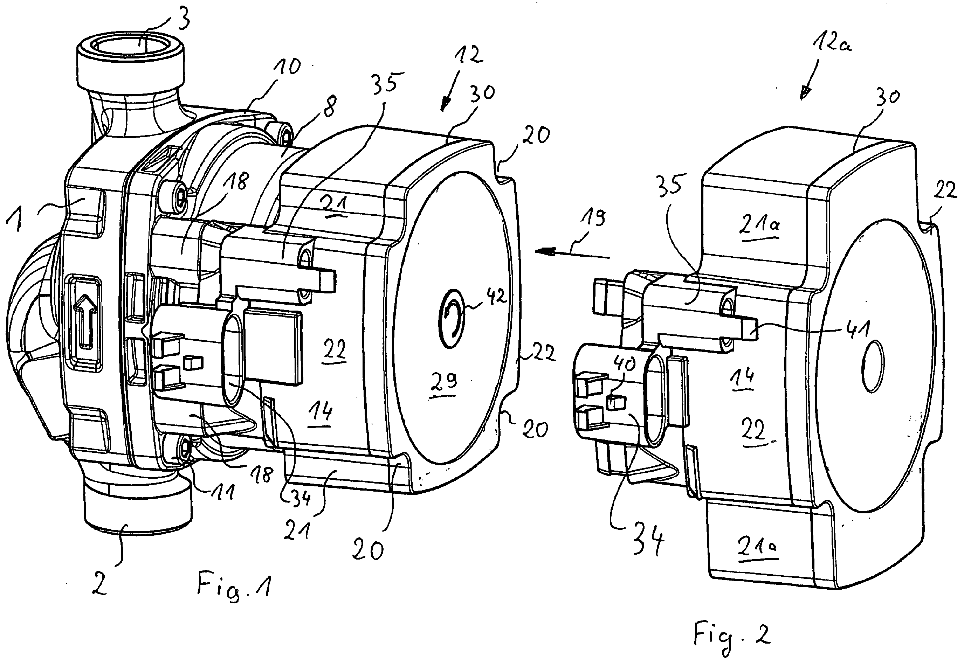

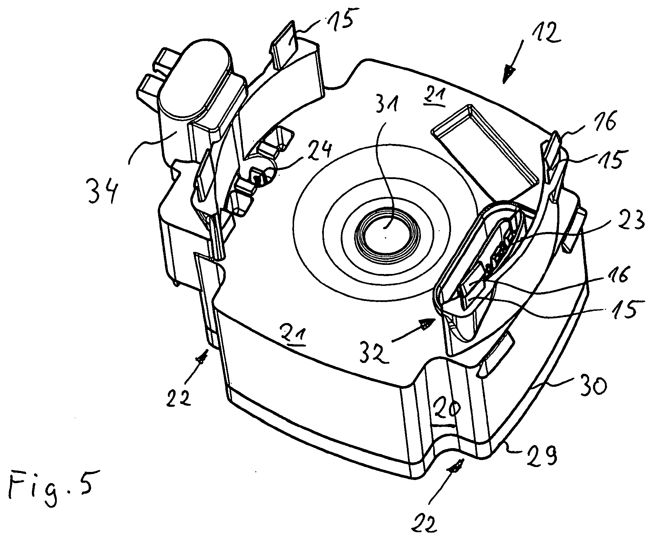

Die anhand der Figuren 1 und 3 bis 8 dargestellte Heizungsumwälzpumpe weist eine Kreiselpumpe mit einem Pumpengehäuse 1 mit einem Saugstutzen 2 und einem Druckstutzen 3 mit einer dazwischen ausgebildeten Kanalführung auf, welche die vom Saugstutzen 2 kommende Flüssigkeit einen Saugmund 4 eines innerhalb des Pumpengehäuse 1 gelagerten Pumpenlaufrads 5 zuführt, dessen Abtriebseite an einen zum Druckstutzen 3 führenden Kanal anschließt.

Die Heizungsumwälzpumpe weist weiterhin einen Motor auf, hier einem Nasslaufmotor, dessen Rotor 6 in einem Spaltrohr 7 läuft, das flüssigkeitsgefüllt ist. Umgeben wird das Spaltrohr 7 von einem Stator, d. h. von den umfangsseitig um das Spaltrohr 7 angeordneten Motorwicklungen, sowie einem Motorgehäuse 8, welches den Stator aufnimmt. Der Rotor 6 weist eine zentrale Welle 9 auf, die sich bis in das Pumpengehäuse 1 erstreckt und das Pumpenlaufrad 5 trägt, sodass die Drehbewegung des Rotors 6 auf das Pumpenlaufrad 5 übertragen wird.

Das Motorgehäuse 8 weist an seiner zum Pumpengehäuse 1 weisenden Seite einen Flansch 10 auf, mit dem es an das Pumpengehäuse 1 angeschlossen und über vier Schrauben 11 in den Eckbereichen des Flansches mit dem Pumpengehäuse 1 dicht und fest verbunden ist. In der dargestellten Ausführungsform bestehen Pumpengehäuse 1 und Motorgehäuse 8 aus Metall und sind als Gussteile gefertigt.

Bei den hier dargestellten Heizungsumwälzpumpen ist das Motorgehäuse 8 als metallisches Gussgehäuse ausgebildet. Für die vorliegende Erfindung kann das Gehäuse jedoch auch durch einen vergossenen Stator gebildet werden, wie dies dann der Fall ist, wenn die Statorwicklung in Kunststoff eingegossen ist. Auch kann das Motorgehäuse als Kunststoffspritzgussteil ausgebildet sein. Es versteht sich, dass dann der weiter unten im Einzelnen beschriebene Erdungskontakt gesondert innerhalb des Kunststoffes eingegliedert ist und elektrisch leitend mit dem Statorblechpaket und dem dann metallisch ausgebildeten Spaltrohr des Motors verbunden ist.

Die Heizungsumwälzpumpe weist weiterhin einen Klemmenkasten 12 auf, der aus thermoplastischem Kunststoff besteht und an der vom Pumpengehäuse 1 abgewandten Axialseite des Motorgehäuses 8 angebracht ist und das Motorgehäuse 8 zu seiner Axialseite vollständig und radial, d. h. umfangsseitig, teilweise übergreift.

Die vorstehend und nachstehend aufgeführten Raumbezeichnungen axial und radial beziehen sich auf die Drehachse 13 des Rotors 6 bzw. des Pumpenlaufrades 5. Die Axialseiten sind also die Seiten, die zur Drehachse 13 im Wesentlichen senkrecht verlaufen, wohingegen Radialflächen die Flächen sind, welche sich parallel zur Drehachse erstrecken.

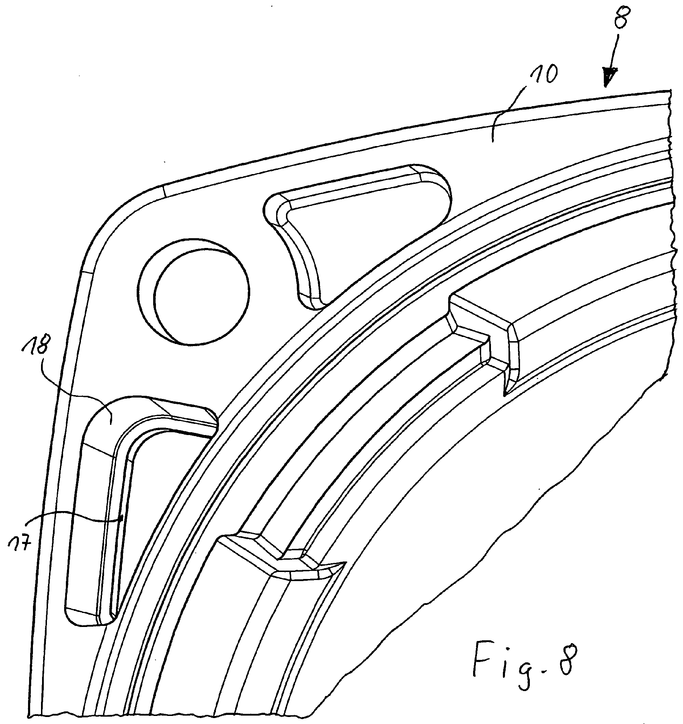

Das Motorgehäuse 8 weist im Flanschbereich einen abgerundeten im Wesentlichen quadratischen Querschnitt auf, wohingegen der übrige Teil des Motorgehäuses 8, also der sich zum Klemmenkasten 12 anschließende Teil im Wesentlichen einen kreisrunden Querschnitt aufweist und daher eine zylindermantelförmige Umfangsfläche aufweist. Während Pumpengehäuse 1 und Motorgehäuse 8 mittels vier Schrauben 11 lösbar miteinander verbunden sind, ist der aus thermoplastischem Kunststoff bestehende Klemmenkasten 12 am Motorgehäuse 1 durch Schnappverbindungen befestigt. Hierzu weist der Klemmenkasten 12 vier sich aus den Seitenwandungen 14 des Klemmenkastens zum Pumpengehäuse 1 hin erstreckende Zungen 15 auf, an deren Ende seitlich Schnappvorsprünge 16 angeordnet sind, die Schnappausnehmungen 17 im Motorgehäuse 8 hintergreifen, welche am Motorgehäuse 8 im bereich des Flansches 10 angeformt sind. Diese Schnappausnehmungen 17 sind jeweils durch eine Stufe in einer rohrförmigen vom Flansch 10 zum Klemmenkasten 12 weisenden Führung 18 am Motorgehäuse 8 gebildet (siehe Fig. 8).

Beim Aufstecken des Klemmenkastens 12 auf das Motorgehäuse 8 in Achsrichtung, also in Aufsteckrichtung 19, gelangen die Zungen 15 in die fluchtend dazu angeordneten Führungen 18, wobei die Schnappvorsprünge 16 durch Querauslenkung der Zungen seitlich nach innen an den die Schnappausnehmungen 17 bildenden Stufen vorbeifahren und nach Überfahren derselben durch elastisches Rückstellen der Zungen 15 nach außen einrasten und damit den Klemmenkasten 12 auf dem Motorgehäuse 8 halten.

Der Klemmenkasten 12 hat in Richtung der Drehachse 13 gesehen, eine im Wesentlichen rechteckige Außenkontur und ist in den Eckbereichen, also im Bereich gedachter axialer Verlängerungen der Schrauben 11 ausgespart ausgebildet, damit die Schrauben 11 auch bei aufgesetzten Klemmenkasten 12 für ein aus Axialrichtung aufgesetztes Werkzeug zugänglich sind. Diese Eckausnehmungen sind mit 20 gekennzeichnet.

Bei dieser Formgebung ergeben sich bei der dargestellten vertikalen Einbaulage (Saugstutzen 2 und Druckstutzen 3 liegen vertikal übereinander) horizontale Randbereiche 21 und vertikale Randbereiche 22 des Klemmenkastens 12.

Die vertikalen Randbereiche 22 werden bei der dargestellten Ausführungsform zur Herausführung elektrischer Kontakte genutzt, wohingegen die horizontalen Randbereich 21 zur Anordnung von Elektronikbauteilen innerhalb des Klemmenkastens genutzt werden. Da baugleiche Pumpen mit Elektromotoren mit unterschiedlicher Motorelektronik ausgestattet werden können, kann, wie beim Vergleich der Darstellung gemäß Fig. 1 und Fig. 2 deutlich wird, bei Verwendung unterschiedlicher Klemmenkästen, die sich ausschließlich in der radialen Erstreckung der horizontalen Randbereiche 21 unterscheiden, das Innenvolumen des Klemmenkastens variiert werden, ohne dass die elektrischen Anschlüsse hier geändert werden müssen, und zwar weder motorseitig noch klemmenkastenseitig. Die erweiterten horizontalen Randbereiche in Fig. 2 sind mit 21a gekennzeichnet, der Klemmenkasten mit 12a.

In den vertikalen Randbereichen 22 sind die elektrischen Kontakte angeordnet, und zwar in Achsrichtung vom Klemmenkasten 12 in Richtung zum Pumpengehäuse 1 gesehen sind in dem rechten vertikalen Randbereich 22 die zur Motorwicklung führenden Kontakte 23 und im linken vertikalen Randbereich 22 die zu einem Steckanschluss vom elektrischen Anschluss des Motors herausgeführten Kontakte 24 angeordnet.

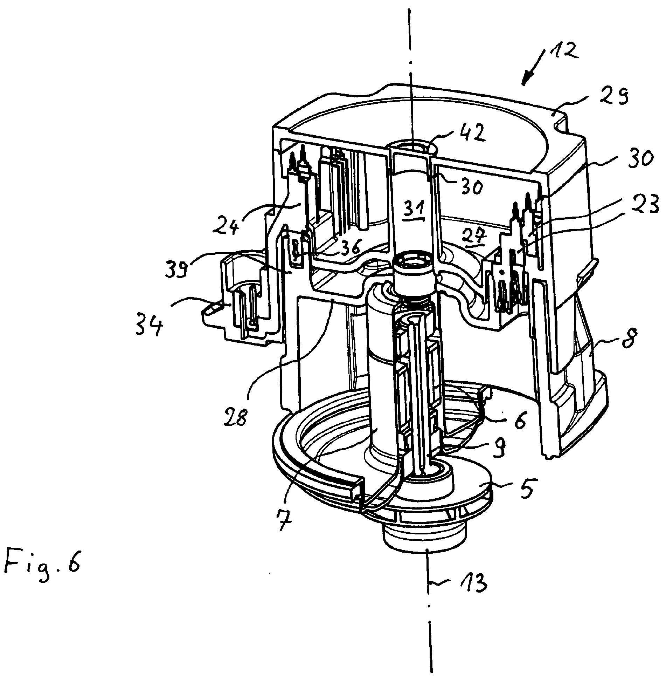

Diese Kontakte 23 und 24 sind in der Schnittdarstellung gemäß Fig. 6 zu erkennen. Sie sind jeweils aus Blech, also als Stanzteile gebildet und gruppenweise gleich ausgebildet, d. h. alle Kontakte 23 sind zueinander baugleich sowie alle Kontakte 24 sind untereinander baugleich.

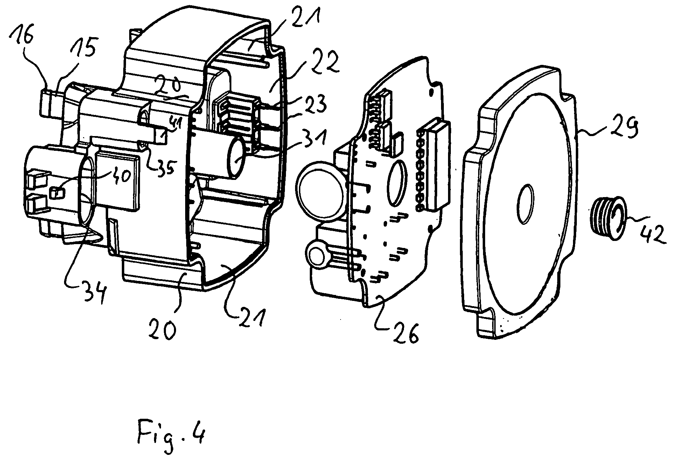

Alle Kontakte 23 und 24 sowie die weiteren an der linken Seite in dem vertikalen Randbereich 22 angeordneten Kontakte 25, welche zur Motorsteuerung dienen, enden im Klemmenkasten 12 an einer Platine 26, die in der Darstellung nach Fig. 6 aus Übersichtsgründen nicht dargestellt ist, jedoch in der Explosionsdarstellung gemäß Fig. 4 sichtbar ist und welche die elektrischen und elektronischen Bauteile der Motorsteuerung trägt, hier insbesondere einen Frequenzumrichter.

Die Kontakte 23, 24 und 25 sind dicht in den aus thermoplastischem Kunststoff gebildeten Klemmenkasten 12 eingegossen und zwar die Kontakte 23 in den Boden 27 des Klemmenkastens 12 und die Kontakte 24 und 25 in den Boden 27 bzw. die daran angrenzende Seitenwand 14.

Der Boden 27 des Klemmenkastens 12 ist vollständig geschlossen ausgebildet und zur Axialwand 28 des Motorgehäuses 8 beabstandet ausgebildet 8 (siehe Fig. 6). Der Boden 27 geht in die ebenfalls geschlossenen Seitenwände 14 über, das axiale Ende der Seitenwände 14 ist durch einen Deckel 29 abgeschlossen, der ebenfalls geschlossen ausgebildet ist (geschlossen bezogen auf das Klemmenkasteninnere). Der Deckel 29 ist durch eine umlaufende Schweißnaht 30 stoffschlüssig mit dem aus Boden 27 und Wandungen 14 bestehenden Grundkörper des Klemmenkastens 12 verbunden. Auf diese Weise ist das Klemmenkasteninnere nicht nur dicht, sondern hermetisch abgeschlossen, d. h. die darin befindliche und empfindliche Elektronik ist zuverlässig gegen Eindringen von Staub, Wasser und Gasen geschützt.

Die Schweißnaht 30 ist durch Laserschweißen von der Deckelseite ausgebildet. Hierzu ist der Deckel 29 aus einem für den Laserstrahl durchlässigem Material gefertigt, wohingegen der Grundkörper, also der Boden 27 und die Seitenwände 14, aus einem für den Laserstrahl im Wesentlichen undurchlässigem Material gefertigt sind. Die Schweißung erfolgt der Gestalt, dass der Laserstrahl von der Deckelseite aus auf die zum Deckel weisenden Stirnseiten der Seitenwände 14 gerichtet wird. Dabei gelangt der Laserstrahl durch den für den Laserstrahl durchlässigen Deckel 29 bis zu den Stirnseiten der Seitenwände 14, wo er das Material aufschmilzt, das aufgrund der Wärmeeinwirkung auch mit dem Deckelmaterial verschmilzt und auf diese Weise eine hermetische Schweißverbindung zwischen den Seitenwänden 14 und dem Deckel 29 bildet, wodurch der Klemmenkasten 12 nach außen hin hermetisch abgeschlossen ist. Dabei erfolgt die Verschweißung nicht nur im Bereich der außen liegenden Wände 14 sondern auch im Bereich der zentralen Ausnehmung 31, also an einer sonst zum Schweißen extrem schlecht zugänglichen Stelle.

Der Klemmenkasten 12 ist durch eine zentrale Ausnehmung 31 durchsetzt, welche in axialer Richtung verläuft, durch einen Stopfen 42 abgeschlossen ist und nicht mit dem Inneren des Klemmenkastens verbunden ist. Diese Ausnehmung 31 führt zu einer ebenfalls mittels einer Schraube verschlossenen Öffnung in der Axialwand 28 des Motorgehäuses 8, über welche das freie Ende der Welle 9 zugänglich ist, um bei einem Blockieren des Rotors 6 diesen von Hand frei drehen zu können. Die diese Öffnung verschließende Schraube ist als eine Art Madenschraube mit Innensechskant ausgebildet, wobei die Innensechskantaufnahme so ausgebildet ist, dass die Schraube beim Entfernen am Werkzeug verbleibt, sodass bei Entfernen des Stopfens 42 mittels eines Schlüssels diese Schraube entfernt und dann mittels eines weiteren Werkzeugs die Welle 9 manuell gedreht werden kann. In umgekehrter Reihenfolge werden die Öffnungen dann wieder verschlossen. Die Ausnehmung 31 durchsetzt den Klemmenkasten 12 also in axialer Richtung, sodass sich ein hermetisch abgeschlossener Ringraum im Klemmenkasten 12 ergibt.

Soweit es die zur Verbindung mit der Motorwicklung vorgesehenen Kontakte 23 angeht, sind diese nach Art einer Muffe 32 in den Boden des Klemmenkastens 12 und zwar in dem rechten vertikalen Randbereich 22 eingeformt. Am Motorgehäuse 8 ist ein an der Axialwand 28 axial zum Klemmenkasten 12 vorspringender Stecker 33 ausgebildet, welcher beim Aufstecken des Klemmenskastens 12 auf das Motorgehäuse 8 mit der Muffe 32 verbunden wird, worüber die elektrische Verbindung zwischen Klemmenkasten 12 und Motorwicklung hergestellt wird.

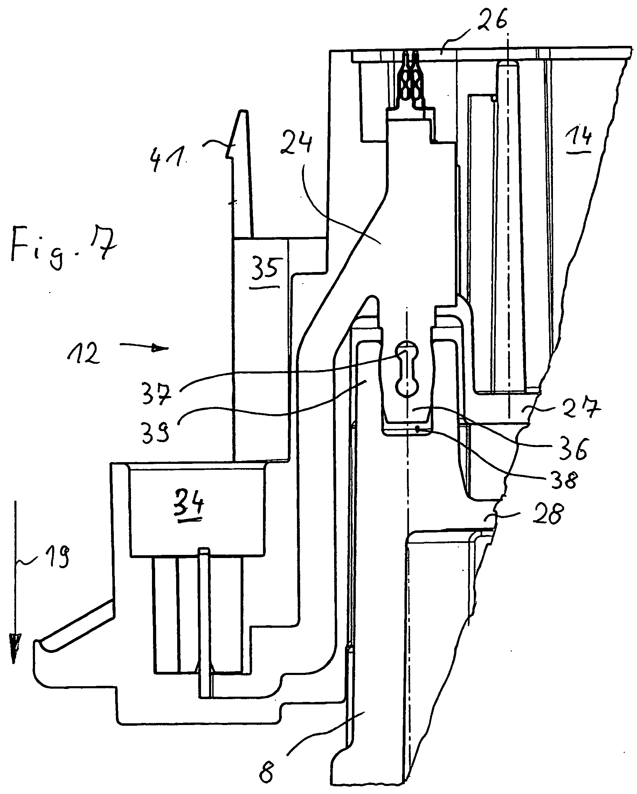

Auf der gegenüberliegenden linken Seite des vertikalen Randbereichs 22 des Klemmenkastens 12 sind die Kontakte 24 mit einem Bein zu einer Muffe 34 und die Kontakte 25 zu einer Muffe 35 herausgeführt. Einer der Kontakte 24, nämlich der in Fig. 7 dargestellte, ist ein Erdungskontakt und dient dazu, das metallische Motorgehäuse 8 mit dem entsprechenden Erdungsanschluss der Muffe 34 bzw. mit dem entsprechenden Erdungsanschluss auf der Platine 26 innerhalb des Klemmenkastens 12 zu verbinden. Hierzu weist der Kontakt 24 an einem Bein einen Steckteil 36 auf, der eine in der Blechebene leicht ballige Form hat sowie eine zentrale Längsausnehmung 37 in Steckrichtung des Steckteils 36. Fluchtend zu dem Steckteil 36 des Erdungskontaktes ist eine muffenartige Ausnehmung 38 in einer axialen Erhebung 39 an der Axialwand 28 des Motorgehäuses 8 vorgesehen. Die Querabmessung der Ausnehmung 38 ist geringfügig kleiner als die Quererstreckung des Steckteils 36 in dem balligen Bereich, sodass beim Einstecken des Steckteils 36 in die Ausnehmung 38 der Steckteil zumindest elastisch, möglicherweise auch plastisch verformt wird, wodurch ein inniger Kontakt zwischen Steckteil 36 und Ausnehmung 38 im Motorgehäuse 8 und somit eine zuverlässige Erdung sichergestellt wird. Damit der Steckteil 36 sich gegebenenfalls auch plastisch verformen kann, ist die Ausnehmung 37 vorgesehen.

Die Nichterdungskontakte 24, die von der Formgebung identisch mit dem Erdungskontakt ausgebildet sind, weisen ebenfalls ein Steckteil 36 mit Ausnehmung 37 auf, sind jedoch in dem Bereich des Steckteils 36 von Kunststoff umgossen, motorseitig ist hier ein Freiraum, da die Erhebung 39 quasi punktuell nur im Bereich des Steckteils 36 des Erdungskontaktes vorgesehen.

Die Kontakte 24 und somit insbesondere auch der Erdungskontakt, der eine innige Verbindung mit dem Motorgehäuse 8 hat, ist in dem Boden 27 bzw. in der Seitenwand 14 zu zwei Beinen abgezweigt ausgebildet (siehe Fig. 7) und verläuft schräg aus dem Klemmenkasten heraus zum Pumpengehäuse 1 hin, parallel am Außenumfang des Motorgehäuses 8 entlang, endet jedoch mit Abstand vor dem Flansch 10 des Motors und ist dort um 180° abgewinkelt, wo die Kontakte 24 zusammen die Muffe 34 bilden, welche zur Aufnahme eines Anschlusssteckers am Ende eines Kabels einer elektrischen Versorgungsleitung dient. Das Gehäuse der Muffe 34 ist einstückig mit dem Klemmenkasten 12 ausgebildet. Die Muffe 34 ist versetzt zum Klemmenkasten 12 neben dem Motorgehäuse 8 am Außenumfang desselben angeordnet. Ein in diese Muffe 34 eingreifender Stecker ist in Axialrichtung, und zwar in Richtung auf das Pumpengehäuse 1 einsteckbar und liegt dann neben dem Klemmenkasten 12, und zwar neben dem linken vertikalen Randbereich 22. Die Muffe 34 weist einen Schnappvorsprung 40, der Teil einer Schnappverbindung ist, deren anderer Teil am Gegenstück, also dem Stecker, vorgesehen ist.

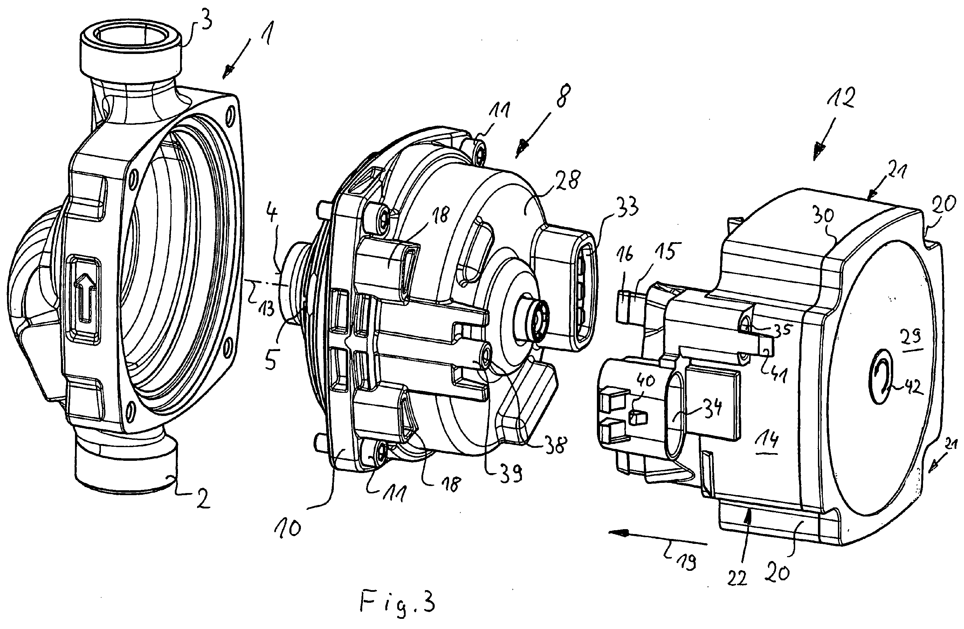

Die Muffe 35, welche die Kontakte 25 aufnimmt, ist in ähnlicher Weise aus dem Klemmenkasten herausgeführt, jedoch durch die Seitenwand 14. Die dort gebildete Muffe 35 liegt in der Darstellung gemäß Fig. 3 an dem linken vertikalen Randbereich 22 am Außenumfang des Klemmenkastens 12 an, ist jedoch anders als die Muffe 34 nicht zum Motorgehäuse 8 hin versetzt angeordnet, sondern liegt direkt neben dem Klemmenkasten 12. Dort weist die Muffe 35 einen Schnappvorsprung 41 auf, welcher den in diese Muffe eingreifenden Stecker gegen Lösen sichert. Die Muffen 34 und 35 sind wie die Muffe 32 einstückig mit dem Klemmenkasten 12 im Kunststoffspritzgussverfahren hergestellt, also durch Umspritzen der Kontakte 23, 24, 25 bei der Herstellung des Klemmenkastengrundkörpers.

Die Muffen 34 und 35 sind als Flachmuffen ausgebildet, derart, dass ihre Kontakte 24 bzw. 25 jeweils nebeneinander in einer im Wesentlichen parallel zum Motorgehäuse 8 angeordneten Ebene befindlich sind. Durch diese Anordnung ist der radiale Bauraum neben dem Motorgehäuse 8 bzw. Klemmenkasten 12 vergleichsweise klein.

Wenn das Motorgehäuse nicht als metallisches Gussgehäuse sondern als Kunststoffgehäuse oder als den Stator umgebene Vergussmasse ausgebildet ist, dann ist die Ausnehmung 38 in der Erhebung des Motorgehäuses mit einem Kontakt versehen, beispielsweise durch eine hohlzylindrische metallische Muffe gebildet, die elektrisch leitend mit dem Statorblechpaket und dem metallischen Spaltrohr 7 verbunden ist, um die elektrische Sicherheit der Heizungsumwälzpumpe für den Fall, dass eines dieser Bauteile durch einen Statordefekt Spannung führt, gewährleistet ist.

### Bezugszeichenliste

- 1: - Pumpengehäuses
- 2: - Saugstutzen
- 3: - Druckstutzen
- 4: - Saugmund
- 5: - Pumpenlaufrad
- 6: - Rotor
- 7: - Spaltrohr
- 8: - Motorgehäuse
- 9: - Welle
- 10: - Flansch von 8
- 11: - Schrauben
- 12: - Klemmenkasten
- 12a: - Klemmenkasten in Fig. 2
- 13: - Drehachse von 9 und 5
- 14: - Seitenwand des Klemmenkastens
- 15: - Zungen von 12
- 16: - Schnappvorsprünge an den Zungen
- 17: - Schnappausnehmungen
- 18: - Führungen
- 19: - Aufsteckrichtung
- 20: - Eckausnehmungen
- 21: - horizontale Randbereiche des Klemmenkastens
- 21a: - horizontale Randbereiche des Klemmenkastens in Fig. 2
- 22: - vertikale Randbereiche
- 23: - Kontakte zum Motor
- 24: - Kontakte zur externen Stromversorgung
- 25: - Kontakte für die Motorsteuerung
- 26: - Platine
- 27: - Boden des Klemmenkastens
- 28: - Axialwand des Motorgehäuses
- 29: - Deckel des Klemmenkastens
- 30: - Schweißnaht
- 31: - zentrale Ausnehmung im Klemmenkasten
- 32: - Muffe im Boden des Klemmenkastens
- 33: - Stecker am Motorgehäuse
- 34: - Muffe der Kontakte 24
- 35: - Muffe der Kontakte 25
- 36: - Steckteil des Kontaktes 24
- 37: - Ausnehmung im Steckteil
- 38: - Ausnehmung in der Erhebung 39
- 39: - Erhebung am Motorgehäuse
- 40: - Schnappvorsprung an der Muffe 34
- 41: - Schnappvorsprung an der Muffe 35
- 42: - Stopfen für die Ausnehmung 31

## Patentansprüche

1. Heizungsumwälzpumpe mit einem Pumpengehäuse (1) mit darin angeordnetem Pumpenlaufrad (5), das von einem Elektromotor angetrieben ist, dessen Stator in einem mit dem Pumpengehäuse (1) verbundenen Motorgehäuse (8) angeordnet ist, und mit einem am Motorgehäuse (8) angeordnete, aus mindestens zwei Bauteilen aus Kunststoff bestehenden und gebildeten Klemmenkasten (12) zum elektrischen Anschluss der Motorwicklung und zur Aufnahme von elektrischen und/oder elektronischen Bauteilen der Motosteuerung, **dadurch gekennzeichnet, dass** diegenannten Banteile des Klemmenkasten (12) aus thermoplastischem Kunststoff bestehen und stoffschlüssig durch Schweißen miteinander dicht und unlösbar verbunden sind, und dass der Klemmenkasten (12) zum Motor und zur Umgebung dicht abgeschlossen ausbildet ist.

2. Heizungsumwälzpumpe nach Anspruch 1, **dadurch gekennzeichnet, dass** der Klemmenkasten (12) aus einem einseitig offenen Behälter (27, 14) besteht, der durch einen Deckel (29) abgeschlossen ist.

3. Heizungsumwälzpumpe nach Anspruch 1 oder 2, **dadurch gekennzeichnet, dass** der Klemmenkasten (12) aus Kunststoffspritzgussteilen gebildet ist.

4. Heizungsumwälzpumpe nach einem der vorhergehenden Ansprüche, **dadurch gekennzeichnet, dass** der Klemmenkasten (12) an der vom dem Pumpengehäuse (1) abgewandten Axialseite des Motorgehäuses (8) angeordnet ist.

5. Heizungsumwälzpumpe nach einem der vorhergehenden Ansprüche, **dadurch gekennzeichnet, dass** der Motor als Nasslaufmotor ausgebildet ist, dass das motorseitige Wellenende über eine verschließbare Gehäuseöffnung zugänglich ist und dass der Klemmenkasten (12) ringförmig ausgebildet ist.

6. Heizungsumwälzpumpe nach einem der vorhergehenden Ansprüche, **dadurch gekennzeichnet, dass** der Klemmenkastenboden (27) geschlossen und von der axialen Stirnwand (28) des Motors beabstandet angeordnet ist.

7. Heizungsumwälzpumpe nach einem der vorhergehenden Ansprüche, **dadurch gekennzeichnet, dass** elektrische Kontakte (23) in den Klemmenkastenboden (27) eingegossen und zu einem Teil einer elektrischen Steckverbindung (32) ausgebildet sind, deren anderer Teil (33) statorseitig zur elektrischen Verbindung mit der Motorwicklung ausgebildet ist.

8. Heizungsumwälzpumpe nach einem der vorhergehenden Ansprüche, **dadurch gekennzeichnet, dass** elektrische Kontakte (24) in eine Seitenwand (14) des Klemmenkastens (12) eingegossen und zu einem Teil einer Steckverbindung als Stecker oder als Muffe (34) ausgebildet sind.

9. Heizungsumwälzpumpe nach einem der vorhergehenden Ansprüche, **dadurch gekennzeichnet, dass** der Klemmenkasten (12) mittels mindestens einer Schnappverbindung (16, 17) am Motorund/oder Pumpengehäuse (1, 8) befestigt ist.

10. Heizungsumwälzpumpe nach einem der vorhergehenden Ansprüche, **dadurch gekennzeichnet, dass** an oder in der Klemmenkastenwandung (14) ein Wärmeverteiler angeordnet ist.

11. Heizungsumwälzpumpe nach Anspruch 10, **dadurch gekennzeichnet, dass** der Wärmeverteiler an oder in einer nicht zum Motorgehäuse (8) weisenden Seite der Klemmenkastenwandung (14) angeordnet ist.

12. Heizungsumwälzpumpe nach Anspruch 10 oder 11, **dadurch gekennzeichnet, dass** der Wärmeverteiler aus Metall besteht.

13. Heizungsumwälzpumpe nach Anspruch 10 oder 11, **dadurch gekennzeichnet, dass** der Wärmeverteiler aus wärmeleitendem Kunststoff besteht und im Zweikomponentenspritzgussverfahren zusammen mit einem Bauteil des Klemmenkastens (12) hergestellt ist.

14. Heizungsumwälzpumpe nach einem der vorhergehenden Ansprüche, **dadurch gekennzeichnet, dass** die mindestens zwei den Klemmenkasten (12) bildenden Bauteile durch Laserschweißen miteinander verbunden sind, wobei vorzugsweise eines der Bauteile für die Strahlung des Lasers durchgängig und das andere Bauteil für die Strahlung des Lasers undurchgängig ist.

15. Heizungsumwälzpumpe nach einem der Ansprüche 2 bis 14, **dadurch gekennzeichnet, dass** der einseitig offene Behälter (27, 14) aus für den Laserstrahl undurchlässigem Material besteht und dass der Deckel (29) aus für den Laserstrahl durchlässigem Material gebildet ist.

## Claims

1. A heating circulation pump with a pump casing (1) having a pump impeller (5) which is arranged therein and which is driven by an electric motor whose stator is arranged in a motor housing (8) connected to the pump casing (1), and with a terminal box (12) which consists and is formed from at least two components of plastic and which is arranged on the motor housing (8) and is for the electric connection of the motor winding and for receiving electrical and/or electronic components of the motor control, **characterised in that** the mentioned components of the terminal box (12) consist of thermoplastic plastic and are connected to one another in a sealed and non-releasable manner with a material fit by way of welding, and that the terminal box (12) is designed in a sealingly closed manner to the motor and to the surroundings.

2. A heating circulation pump according to claim 1, **characterised in that** the terminal box (12) consists of a container (27, 14) which is open at one side and which is closed by a cover (29).

3. A heating circulation pump according to claim 1 or 2, **characterised in that** the terminal box (12) is manufactured from plastic injection moulded parts.

4. A heating circulation pump according to one of the preceding claims, **characterised in that** the terminal box (12) is arranged at the axial side of the motor housing (8) which is away from the pump casing (1).

5. A heating circulation pump according to one of the preceding claims, **characterised in that** the motor is designed as a wet-running motor, that the motor-side shaft end is accessible via a closable housing opening and that the terminal box (12) is designed in an annular manner.

6. A heating circulation pump according to one of the preceding claims, **characterised in that** the terminal box base (27) is closed and is arranged distanced to the axial face wall (28) of the motor.

7. A heating circulation pump according to one of the preceding claims, **characterised in that** electric contacts (23) are moulded into the terminal box base (27) and are formed into a part of an electric plug-in connection (32), whose other part (33) is formed on the stator side for the electric connection to the motor winding.

8. A heating circulation pump according to one of the preceding claims, **characterised in that** the electrical contacts (24) are moulded into a side wall (14) of the terminal box (12) and are formed into a part of a plug-in connection as a plug or as a socket (34).

9. A heating circulation pump according to one of the preceding claims, **characterised in that** the terminal box (12) is fastened on the motor housing and/or pump casing (1, 8) by way of at least one snap connection (16, 17).

10. A heating circulation pump according to one of the preceding claims, **characterised in that** a heat distributor is arranged on or in the terminal box wall (14).

11. A heating circulation pump according claim 10, **characterised in that** the heat distributor is arranged on or in a side of the terminal box wall (14) which does not face the motor housing (8).

12. A heating circulation pump according to one of the claims 10 or 11, **characterised in that** the heat distributor consists of metal.

13. A heating circulation pump according to claim 10 or 11, **characterised in that** the heat distributor consists of a thermally conductive plastic and is manufactured with the two-component injection moulding method together with a component of the terminal box (12).

14. A heating circulation pump according to one of the preceding claims, **characterised in that** the at least two components forming the terminal box (12) are connected to one another by way of laser welding, wherein preferably one of the components is transparent to the beam of the laser and the other component is non-transparent to the beam of the laser.

15. A heating circulation pump according to one of the claims 2 to 14, **characterised in that** the container (27, 14) open at one side consists of material which is non-transparent for the laser beam and that the cover (29) is formed from material which is transparent to the laser beam.

## Revendications

1. Pompe de circulation de chauffage comprenant un corps de pompe (1) à l'intérieur duquel est placé un rotor de pompe (5) qui est entraîné par un moteur électrique et dont le stator est disposé dans un carter de moteur (8) relié au corps de pompe (1), et une boîte à bornes (12), disposée sur le carter de moteur (8) et composée de et formée d'au moins deux composants en matière plastique, destinée au raccordement électrique de l'enroulement du moteur et au logement de composants électriques et/ou électroniques de la commande du moteur, **caractérisée en ce que** lesdits composants de la boîte à bornes (12) sont composés de matière thermoplastique et sont reliés entre eux par liaison de matière, par soudure, de manière étanche et inamovible, et **en ce que** la boîte à bornes (12) est fermée de manière étanche par rapport au moteur et à l'environnement.

2. Pompe de circulation de chauffage selon la revendication 1, **caractérisée en ce que** la boîte à bornes (12) est constituée d'un récipient (27, 14) ouvert d'un côté et qui est fermé par un couvercle (29).

3. Pompe de circulation de chauffage selon la revendication 1 ou 2, **caractérisée en ce que** la boîte à bornes (12) est formée de pièces moulées par injection de matière plastique.

4. Pompe de circulation de chauffage selon l'une des revendications précédentes, **caractérisée en ce que** la boîte à bornes (12) est disposée sur le côté axial du carter de moteur (8) opposé au corps de pompe (1).

5. Pompe de circulation de chauffage selon l'une des revendications précédentes, **caractérisée en ce que** le moteur est conçu en tant que moteur à fonctionnement en milieu humide, **en ce que** l'extrémité d'arbre côté moteur est accessible via une ouverture de carter verrouillable et **en ce que** la boîte à bornes (12) est de forme annulaire.

6. Pompe de circulation de chauffage selon l'une des revendications précédentes, **caractérisée en ce que** le fond (27) de la boîte à bornes est fermé et espacé de la paroi avant axiale (28) du moteur.

7. Pompe de circulation de chauffage selon l'une des revendications précédentes, **caractérisée en ce que** des contacts électriques (23) sont coulés dans le fond (27) de la boîte à bornes et conçus pour former une partie d'une connexion électrique enfichable (32), dont l'autre partie (33) est formée, côté stator, pour le raccordement électrique avec l'enroulement du moteur.

8. Pompe de circulation de chauffage selon l'une des revendications précédentes, **caractérisée en ce que** des contacts électriques (24) sont coulés dans une paroi latérale (14) de la boîte à bornes (12) et conçus pour former une partie d'une connexion enfichable sous la forme d'un connecteur ou d'un manchon (34).

9. Pompe de circulation de chauffage selon l'une des revendications précédentes, **caractérisée en ce que** la boîte à bornes (12) est fixée sur le carter de moteur et/ou le corps de pompe (1, 8) au moyen d'au moins une liaison par encliquetage (16, 17).

10. Pompe de circulation de chauffage selon l'une des revendications précédentes, **caractérisée en ce qu'**un dissipateur de chaleur est disposé sur ou dans la paroi (14) de la boîte à bornes.

11. Pompe de circulation de chauffage selon la revendication 10, **caractérisée en ce que** le dissipateur de chaleur est disposé sur ou dans un côté de la paroi (14) de la boîte à bornes non orienté vers le carter de moteur (8).

12. Pompe de circulation de chauffage selon la revendication 10 ou 11, **caractérisée en ce que** le dissipateur de chaleur se compose de métal.

13. Pompe de circulation de chauffage selon la revendication 10 ou 11, **caractérisée en ce que** le dissipateur de chaleur se compose de matière plastique thermoconductrice et est fabriqué conjointement avec un composant de la boîte à bornes (12) selon un procédé de moulage par injection à deux composants.

14. Pompe de circulation de chauffage selon l'une des revendications précédentes, **caractérisée en ce que** les composants formant la boîte à bornes (12), au moins au nombre de deux, sont reliés entre eux par soudure au laser, au moins l'un des composants étant de préférence perméable au rayonnement du laser et l'autre composant étant imperméable au rayonnement du laser.

15. Pompe de circulation de chauffage selon l'une des revendications 2 à 14, **caractérisée en ce que** le récipient (27, 14) ouvert d'un côté se compose de matériau imperméable au rayon laser et **en ce que** le couvercle (29) est formé de matériau perméable au rayon laser.
